# EUROPÄISCHE PATENTSCHRIFT

(11) **EP 2 657 502 B1**
(45) Veröffentlichungstag und Bekanntmachung des Hinweises auf die Patenterteilung: **11.02.2015**
(21) Anmeldenummer: 13160529.7
(22) Anmeldetag: 22.03.2013
(51) Int. Cl.: F02M 55/02, F02M 37/00, F02M 43/00, F02M 63/02, F02M 25/022

(54) **Hochdruckeinspritzleiste für ein Kraftstoffeinspritzsystem für eine Brennkraftmaschine**
High pressure injection strip for a fuel injection system for an internal combustion engine
Rampe d'injection haute pression pour système d'injection de carburant pour moteur à combustion interne

(30) Priorität: 26.04.2012 DE 102012206984
(43) Veröffentlichungstag der Anmeldung: 30.10.2013
(73) Patentinhaber: Bayerische Motoren Werke Aktiengesellschaft, 80809 München (DE)
(72) Erfinder: Böhm, Martin, 82343 Pöcking (DE); Maehrle, Werner, 85293 Reichertshausen (DE); Dr.Rubbert, Stephan, 85757 Karlsfeld (DE)

(56) Entgegenhaltungen:
- EP-A1- 0 593 053
- EP-A1- 0 887 544
- EP-A2- 1 416 151
- WO-A1-2011/130791
- DE-A1- 19 609 799
- DE-C1- 19 618 791
- DE-C1- 19 635 450
- JP-A- H07 208 298
- JP-A- 2000 205 081

## Beschreibung

Die Erfindung betrifft eine Hochdruckeinspritzleiste für ein Kraftstoffeinspritzsystem für eine Brennkraftmaschine mit den Merkmalen aus dem Oberbegriff des Patentanspruchs 1.

Dem Kraftstoff für Brennkraftmaschinen können in der KraftstoffleitungFlüssigkeiten zugemischt werden, um die Verbrennung, die Schadstoffemissionen und das Temperaturverhalten der Verbrennung zu verbessern. Das Volumen des Kraftstoffhochdrucksystems muss jedoch eine gewisse Mindestgröße aufweisen, um Druckpulsationen, welche durch die einzelnen Förderhübe der Hochdruckpumpe und die Einspritzungen der einzelnenKraftstoffinjektoren verursacht werden, zu dämpfen und eine zu große Abweichung der Einspritzdrücke zum Zeitpunkt der Öffnung der Kraftstoffinjektoren der einzelnen Zylinder zu vermeiden. Bei instationären Anwendungen, wie beispielsweise in einem Kraftfahrzeug, führt die Änderung der Menge der zugemischten Flüssigkeit oder Zu- bzw. Abschaltung der Zumischung der Flüssigkeit, zu einer erhebliche Verzugszeit, bis die zugemischte Flüssigkeit in der erforderlichen Menge in den Brennräumen der Brennkraftmaschine zur Verfügung steht, bzw. muss nach einer Abschaltung der Zumischung noch längere Zeit das Gemisch aus Kraftstoff und zugesetzter Flüssigkeit von der Brennkraftmaschine verarbeitet werden. Es ist dann u. U. nicht zu vermeiden, dass die Brennkraftmaschine abgestellt wird, bevor die gesamte zugemischte Flüssigkeit aus dem Hochdrucksystem von der Brennkraftmaschine verarbeitet wurde. Die Brennkraftmaschine muss dann, in diesem Fall, mit dem noch vorhandenen Gemisch aus Kraftstoff und zugemischter Flüssigkeit gestartet werden. Die Startfähigkeit der Brennkraftmaschine kann dadurch stark eingeschränkt sein. Für den Fall, dass die zugemischte Flüssigkeit Wasser ist, kann das Wasser im Hochdrucksystem bei abgestellter Brennkraftmaschine und bei niedriger Außentemperatur gefrieren. In diesem Zustand könnte die Brennkraftmaschine nicht mehr gestartet werden und die Bauteile des Kraftstoffeinspritzsystems können beschädigt werden.

Ein gattungsgemäßes System zur Zumischung von Flüssigkeiten zu einem Kraftstoff ist beispielsweise in der deutschen Offenlegungsschrift DE 196 09 799 A1 beschrieben. In dieser Offenlegungsschrift werden ein Brennstoffeinspritzverfahren und Brennstoffeinspresystem für eine Brennkraftmaschine, insbesondere einen Dieselmotor, mit einer Anzahl von durch eine Hochdruckpumpe über einen gemeinsamen Vorspeicher mit Brennstoff versorgten Brennstoffeinspritzeinrichtungen beschrieben. Die Brennkraftmaschine kann wahlweise mit einem ersten Brennstoff und mit einem zweiten Brennstoff in Form von reinem Brennstoff oder insbesondere einer Emulsion aus Brennstoff und einem gegenüber dem Brennstoff unlösbaren weiteren Stoff betrieben werden, wobei der Brennstoff in einem Kreislauf durch den gemeinsamen Vorspeicher geführt wird. Erfindungsgemäß ist es in dieser Offenlegungsschrift vorgesehen, dass der Brennstoffkreislauf von dem gemeinsamen Vorspeicher über Durchgänge an dem Brennstoffeinspritzeinrichtungen geführt und der nicht in den Motor eingespritzte Teil des Brennstoffs in einem Kreislauf über eine Rücklaufleitung zu dem gemeinsamen Vorspeicher geführt wird.

Auch dieser gattungsgemäße Stand der Technik weist den Nachteil auf, dass beim Abstellen der Brennkraftmaschine beispielsweise Wasser im Einspritzsystem zurückbleiben kann, was das Einspritzsystem schädigen oder ein Starten der Brennkraftmaschine unmöglich machen kann.

Aufgabe der vorliegenden Erfindung ist es, eine Maßnahme aufzuzeigen, wie ein Restentleeren des Hochdrucksystems von dem zugemischten Fluid, wie z. B. Wasser beispielsweise beim Abstellen der Brennkraftmaschine gewährleistet werden kann.

Diese Aufgabe wird durch das Merkmal im kennzeichnenden Teil des Patentanspruchs 1 gelöst.

Um das Volumen zwischen dem Austritt aus der Fördereinrichtung, bzw. der Pumpe und den Kraftstoffinjektoren der einzelnen Zylinder der Brennkraftmaschine und damit die Verzugszeit bei Änderung des Anteils des zugemischten Fluids in der Kraftstoffleitung möglichst klein zu halten, wird ein Teil des Volumens des Kraftstoffeinspritzsystems in einen nicht von dem Gemisch durchströmten Bereich, das zweite Innenvolumen, verlagert. Dieser Bereich muss bei Änderung der Menge des zugemischten Fluids nicht ausgespült werden um die gewünschte Änderung des Anteils des zugemischten Fluids an den Kraftstoffinjektoren zur Verfügung stellen zu können. Bei ausreichender Anbindung an das durchströmte Volumen wirkt das zweite Innenvolumen dennoch dämpfend auf die Druckpulsationen in dem Kraftstoffeinspritzsystem. Das außerhalb des durchströmten Bereichs der Hochdruckeinspritzleiste verlagerte Volumen ist so zu dem durchströmten Bereich angeordnet, dass das zum Kraftstoff zugemischte Fluid bei Entmischung nicht in dieses zweite Innenvolumen eindringen kann.

Durch das geringere durchströmte Volumen in der Hochdruckeinspritzleiste werden in vorteilhafter Weise die Verzugszeiten bei Änderung des Anteils des zugemischten Fluids verringert ohne die Dämpfung der Druckpulsationen in dem Kraftstoffeinspritzsystem zu verschlechtern.

Vorteilhafte Weiterbildungen der Erfindung sind in den Unteransprüchen beschrieben.

Bevorzugt ist gemäß Patentanspruch 2 der zweite Behälter in Einbaulage der Hochdruckeinspritzleiste oben angeordnet, so dass für den Fall, dass das zugemischte Fluid schwerer ist als der Kraftstoff, beispielsweise Wasser, dieses nicht in das zweite Innenvolumen eindringen kann.

Die Ausgestaltungen gemäß der Patentansprüche 3 und 4 sind zwei besonders bevorzugte Ausführungsbeispiele.

Mit der Ausgestaltung gemäß Patentanspruch 5 kann die Hochdruckeinspritzleiste aktiv gespült werden und somit das Gemisch aus Kraftstoff und zugemischtem Fluid aus der Hochdruckeinspritzleiste entfernt werden.

Bevorzugt handelt es sich gemäß Patentanspruch 6 bei dem flüssigen Fluid um Wasser. Diese Art der Wassereinspritzung wird bevorzugt verwendet, um das Klopfverhalten einer Otto-Brennkraftmaschine, insbesondere einer aufgeladenen Otto-Brennkraftmaschine positiv zu beeinflussen.

Im Folgenden ist die Erfindung anhand eines Ausführungsbeispieles in einer einzigen Figur näher erläutert.

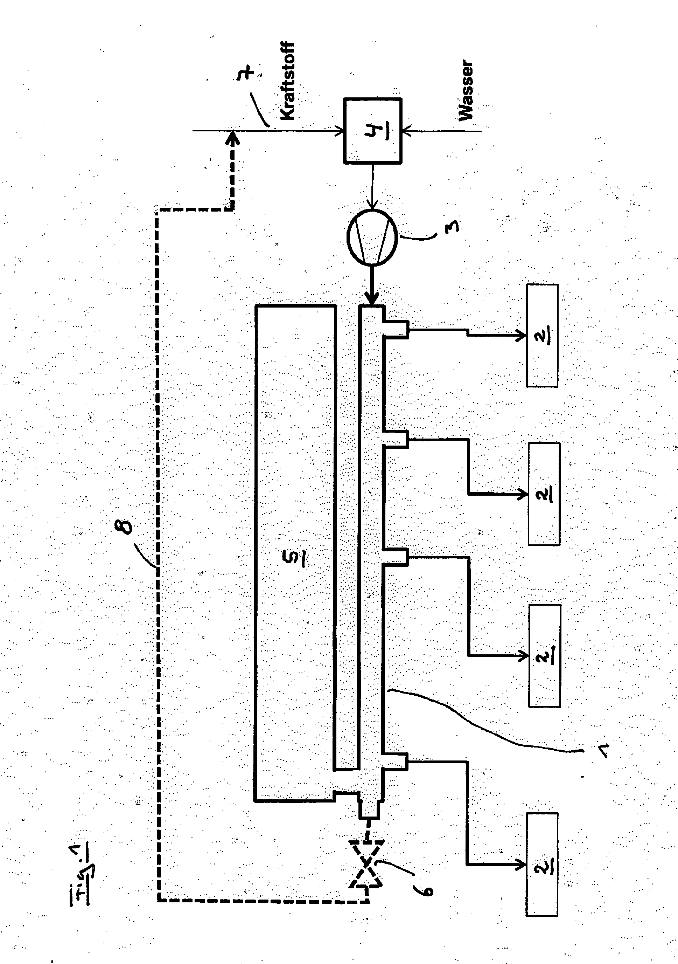

- Fig. 1: zeigt schematisch einen Aufbau eines erfindungsgemäßen Kraftstoffeinspritzsystems.

Fig. 1 zeigt schematisch eine erfindungsgemäße Hochdruckeinspritzleiste 1 für ein Kraftstoffeinspritzsystem für eine Brennkraftmaschine, insbesondere einer aufgeladenen Otto-Brennkraftmaschine mit einer Kraftstoffeinspritzung direkt in die Zylinder. Die Hochdruckeinspritzleiste 1, auch Common Rail genannt, ist für ein Kraftstoffeinspritzsystem für eine Brennkraftmaschine mit zumindest zwei Zylindern, im vorliegenden Ausführungsbeispiel vier Zylinder, vorgesehen. Weiter ist für jeden Zylinder der Brennkraftmaschine ein mit der Hochdruckeinspritzleiste 1 Kraftstoff führend verbundener Kraftstoffinjektor 2 vorgesehen. Der Kraftstoff wird von einer Pumpe 3, in die Hochdruckeinspritzleiste 1 gefördert, wobei in Strömungsrichtung des Kraftstoffes vor der Pumpe 3 eine Mischvorrichtung 4 vorgesehen ist, in der der Kraftstoff mit einem zweiten Fluid mischbar ist. Ein Zulauf 7 von Kraftstoff bzw. zweitem Fluid, im vorliegenden Ausführungsbeispiel Wasser, in die Mischvorrichtung 4 ist jeweils durch einen Pfeil symbolisch dargestellt.

Erfindungsgemäß ist ein Innenvolumen der Hochdruckeinspritzleiste 1 mit einem zweiten Innenvolumen eines zweiten Behälters 5 kraftstoffführend verbunden. Durch die erfindungsgemäße Ausgestaltung werden Druckschwankungen im Kraftstoffeinspritzsystem weitestgehend vermieden, sowie eine schnelle Anpassung des Mischungsverhältnisses von Kraftstoff und zweitem Fluid ist möglich.

Weiter ist der zweite Behälter 5 in Einbaulage der Hochdruckeinspritzleiste 1 bevorzugt über der Hochdruckeinspritzleiste 1, d. h. oben angeordnet. Bei einer Entmischung von Kraftstoff und beispielsweise Wasser wird somit sicher vermieden, dass das schwerere Wasser in den oberen zweiten Behälter 5 gemischt wird.

Bevorzugt beträgt das Innenvolumen für jeden Zylinder 1 mm³ bis 10 mm³, d. h. in dem vorliegenden Ausführungsbeispiel zwischen 4 mm³ und 40 mm³ Um den erfindungsgemäßen Effekt bestmöglich zu erzielen, beträgt das zweite Innenvolumen des zweiten Behälters 5 bevorzugt das 5 bis 50fache des Innenvolumens der Hochdruckeinspritzleiste 1.

Weiter ist die Hochdruckeinspritzleiste 1 bevorzugt auf der der Pumpe 3 abgewandten Seite über ein Ventil 6 über eine Leitung 8 mit der Kraftstoffzuführung 7 zur Mischvorrichtung 4 verbindbar. Durch diese Ausgestaltung ist es möglich, nach einem Ausschalten der Brennkraftmaschine die Hochdruckeinspritzleiste 1 schnell zu durchspülen, so dass reiner Kraftstoff in der Hochdruckeinspritzleiste 1 zur Verfügung steht.

Weiter bevorzugt handelt es sich bei dem flüssigen Fluid um Wasser. Dies wird insbesondere bei ottomotorischer Verbrennung eingesetzt, um eine klopfende Verbrennung zu verhindern bzw. die Verbrennungstemperaturen abzusenken, so dass NOₓ-Emissionen reduziert werden können.

Um das Volumen zwischen Austritt aus der Pumpe 3 und den Kraftstoffinjektoren 2 der einzelnen Zylinder und damit die Verzugszeit bei Änderung des Anteils des zugemischten flüssigen Fluids in der Kraftstoffleitung möglichst klein zu halten, wird erfindungsgemäß ein Teil des Volumens der Hochdruckeinspritzleiste 1 in einen nicht durchströmbaren Bereich verlagert. Dieser Bereich muss bei Änderung der Menge des zugemischten flüssigen Fluids nicht ausgespült werden um die gewünschte Änderung des Anteils des zugemischten flüssigen Fluids an den Kraftstoffinjektoren 2 schnellst möglich zur Verfügung stellen zu können. Bei ausreichender Anbindung an das durchströmte Volumen in der Hochdruckeinspritzleiste 1 wirkt es dennoch in vorteilhafter Weise dämpfend auf die Druckpulsationen in dem Kraftstoffeinspritzsystem. Weiter wird das außerhalb des durchströmten Bereichs verlagerte Volumen im zweiten Behälter 5 so angeordnet, dass das dem Kraftstoff zugemischte flüssige Fluid bei Entmischung nicht in diesen Bereich eindringen kann.

Durch das kleinere durchströmte Volumen werden die Verzugszeiten bei Änderung des Anteils des zugemischten flüssigen Fluids in vorteilhafter Weise verringert ohne die Dämpfung der Druckpulsationen in dem Kraftstoffeinspritzsystem zu verschlechtern.

### Bezugszeichenliste:

- 1.: Hochdruckeinspritzleiste
- 2.: Kraftstoffinjektor
- 3.: Pumpe
- 4.: Mischvorrichtung
- 5.: zweiter Behälter
- 6.: Ventil
- 7.: Kraftstoffzuführung
- 8.: Leitung

## Patentansprüche

1. Hochdruckeinspritzleiste (1) (Common Rail) für ein Kraftstoffeinspritzsystem für eine Brennkraftmaschine mit zumindest zwei Zylindern, wobei für jeden Zylinder ein Kraftstoffinjektor (2) vorgesehen ist, die über die Hochdruckeinspritzleiste (1) mit Kraftstoff versorgbar sind, wobei der Kraftstoff von einer Pumpe (3) in die Hochdruckeinspritzleiste (1) förderbar ist und wobei in Strömungsrichtung des Kraftstoffes vor der Pumpe (3) eine Mischvorrichtung (4) vorgesehen ist, in der der Kraftstoff mit einem zweiten flüssigen Fluid mischbar ist,
**dadurch gekennzeichnet, dass** ein Innenvolumen der Hochdruckeinspritzleiste (1) mit einem zweiten Innenvolumen eines zweiten Behälters (5) Kraftstoff führend verbunden ist, wobei der zweite Behälter (5) in Einbaulage der Hochdruckeinspritzleiste (1) oben angeordnet ist.

2. Hochdruckeinspritzleiste nach Patentanspruch 1,
**dadurch gekennzeichnet, dass** das Innenvolumen für jeden Zylinder 1 ml bis 10 ml beträgt.

3. Hochdruckeinspritzleiste nach einem der Patentansprüche 1 oder 2,
**dadurch gekennzeichnet, dass** das zweite Innenvolumen das 5 bis 50-fache des Innenvolumens beträgt.

4. Hochdruckeinspritzleiste nach Patentanspruch 1,
**dadurch gekennzeichnet, dass** die Hochdruckeinspritzleiste (1) auf der einer Kraftstoff-Einströmseite abgewandten Seite über ein Ventil (6) über eine Leitung (8) mit einer Kraftstoffzuführung (7) zur Mischvorrichtung (4) verbindbar ist.

5. Hochdruckeinspritzleiste nach einem der Patentansprüche 1 oder 4, **dadurch gekennzeichnet, dass** das flüssige Fluid Wasser ist.

## Claims

1. A high-pressure injection strip(1) (common rail) for a fuel injection system for an internal combustion engine having at least two cylinders, wherein each cylinder is provided with a fuel injector (2) supplied with fuel through the high-pressure injection strip (1), wherein the fuel is conveyed by a pump (3) to the high-pressure injection strip (1), wherein a mixer (4) for mixing the fuel with a second liquid is provided in front of the pump (3) in the direction of flow of the fuel,
**characterised in that** an inner volume of the high-pressure injection strip (1) is connected for conveying fuel to a second inner volume in a second container (5), wherein the second container (5) is disposed on top when the high-pressure injection strip (1) is in the installed position.

2. A rail according to claim 1,
**characterised in that** the space for each cylinder (1) is 1 to 10 ml.

3. A rail according to claim 1 or claim 2,
**characterised in that** the second inner volume is 5 to 50 times the inner volume.

4. A rail according to claim 1, **characterised in that** on the side remote from the fuel injection side, the high-pressure injection strip (1) is connectable to the mixer (4) via a valve (6) and a line (8) to a fuel supply (7).

5. A rail according to claim 1 or claim 4,
**characterised in that** the liquid is water.

## Revendications

1. Rampe d'injection haute pression (Common Rail) (1) pour un système d'injection de carburant d'un moteur à combustion interne comprenant au moins deux cylindres, dans laquelle, pour chacun de ces cylindres il est prévu un injecteur de carburant (2) pouvant être alimenté en carburant par l'intermédiaire de la rampe d'injection haute pression (1), le carburant pouvant être fourni par une pompe (3) dans la rampe d'injection haute pression (1), et, dans la direction d'écoulement du carburant, en amont de la pompe (3) étant prévu un dispositif mélangeur (4) dans lequel le carburant peut être mélangé avec un second liquide,
**caractérisée en ce que**
le volume interne de la rampe d'injection haute pression (1) peut être relié de manière à pouvoir être parcouru par le carburant avec un second volume interne d'un second réservoir (5), ce second réservoir (5) étant monté en position haute dans la position de montage de la rampe d'injection haute pression (1).

2. Rampe d'injection haute pression conforme à la revendication 1, **caractérisée en ce que**
le volume interne de chacun des cylindre est de 1 à 10 ml.

3. Rampe d'injection haute pression conforme à l'une des revendications 1 ou 2,
**caractérisée en ce que**
le second volume interne est égal à 5 à 50 fois le volume interne.

4. Rampe d'injection haute pression conforme à la revendication 1, **caractérisée en ce que**
la rampe d'injection haute pression (1) peut être reliée du côté situé à l'opposé du côté d'arrivée du carburant, par l'intermédiaire d'une soupape (6) et d'une conduite (8) avec une alimentation en carburant (7) conduisant au dispositif de mélange (4).

5. Rampe d'injection haute pression conforme à l'une des revendications 1 ou 4,
**caractérisée en ce que**
le liquide est de l'eau.
